# EUROPEAN PATENT SPECIFICATION

(11) **EP 2 076 573 B1**
(45) Date of publication and mention of the grant of the patent: **10.04.2013**
(21) Application number: 07853997.0
(22) Date of filing: 12.10.2007
(51) Int. Cl.: C09D 127/12, B32B 27/30, C08K 5/18, C08K 5/34, C09D 5/03

(54) **FLUOROPOLYMER COMPOSITIONS CONTAINING NITROGEN-CONTAINING AROMATIC MATERIALS**
FLUORPOLYMERZUSAMMENSETZUNGEN MIT STICKSTOFFHALTLIGEN AROMATISCHEN MATERALIEN
COMPOSITIONS DE FLUOROPOLYMÈRE CONTENANT DES MATÉRIAUX AROMATIQUES CONTENANT DE L'AZOTE

(30) Priority: 13.10.2006 US 829318 P
(43) Date of publication of application: 08.07.2009
(73) Proprietor: 3M Innovative Properties Company, St. Paul, MN 55133-3427 (US)
(72) Inventor: JING, Naiyong, Saint Paul, Minnesota 55133-3427 (US); CHANDLER, Blake E., Saint Paul, Minnesota 55133-3427 (US); DAHLKE, Gregg D., Saint Paul, Minnesota 55133-3427 (US)
(74) Representative: Kurz, Arnd
(86) International application number: PCT/US2007/081223
(87) International publication number: WO 2008/048888

(56) References cited:
- EP-A- 0 140 207
- EP-A- 0 708 139
- GB-A- 1 286 536
- JP-A- 2005 335 184
- US-A- 3 502 628
- US-A- 3 674 763
- US-A- 4 496 682
- US-A- 4 914 158
- US-A1- 2004 162 395

## Description

### Summary

The present invention relates to a composition comprising (a) an aromatic material selected from (i) an aromatic compound, (ii) an aromatic resin, (iii) a heteroaromatic compound, and (iv) a heteroaromatic resin, wherein the aromatic material has (1) at least one non-hindered amine group bonded to a heteroaromatic ring or at least one aromatic ring having two or more non-hindered amine groups bonded directly to the aromatic ring, (2) a heteroaromatic ring and has a nitrogen atom in the heteroaromatic ring, or (3) a combination thereof; (b) an inorganic base; (c) a fluoroplastic; and (d) optionally a phase transfer catalyst.

In yet another aspect, the invention relates to a reaction product of (a) an aromatic material selected from (i) an aromatic compound, (ii) an aromatic resin, (iii) a heteroaromatic compound, and (iv) a heteroaromatic resin, wherein the aromatic material has (1) at least one non-hindered amine group bonded to a heteroaromatic ring or at least one aromatic ring having two or more non-hindered amine groups bonded directly to the aromatic ring, (2) a heteroaromatic ring and has a nitrogen atom in the heteroaromatic ring, or (3) a combination thereof with a fluoroplastic, an inorganic base, and optionally a phase transfer catalyst.

In another aspect, the present invention relates to a multi-layer article comprising a substrate and a first layer comprising a reaction product of (a) an aromatic material selected from (i) an aromatic compound, (ii) an aromatic resin, (iii) a heteroaromatic compound, and (iv) a heteroaromatic resin, wherein the aromatic material has (1) at least one non-hindered amine group bonded to a heteroaromatic ring or at least one aromatic ring having two or more non-hindered amine groups bonded directly to the aromatic ring, (2) a heteroaromatic ring and has a nitrogen atom in the heteroaromatic ring, or (3) a combination thereof with a fluoroplastic, an inorganic base, and optionally a phase transfer catalyst. Each of the aromatic material and the inorganic base is present at the interface between the substrate and the remainder of the first layer, present with the fluoroplastic, or both. The first layer is bonded to the substrate.

In another aspect, the invention provides a method of providing a fluoropolymer coating composition comprising providing a composition comprising (a) an aromatic material selected from (i) an aromatic compound, (ii) an aromatic resin, (iii) a heteroaromatic compound, and (iv) a heteroaromatic resin, wherein the aromatic material has (1) at least one non-hindered amine group bonded to a heteroaromatic ring or at least one aromatic ring having two or more non-hindered amine groups bonded directly to the aromatic ring, (2) a heteroaromatic ring and has a nitrogen atom in the heteroaromatic ring, or (3) a combination thereof. The coating further comprises an inorganic base, a fluoroplastic, and optionally comprises a phase transfer catalyst. The fluoroplastic is provided in granular or powder form. The method further comprises heating the composition to a temperature above the melting point of the aromatic material or providing the composition in solution, and mixing the composition.

It is an advantage of the present invention, in some embodiments, to provide compositions for bonding fluoropolymers to substrates such as metals. Other features and advantages of the invention may be apparent from the following detailed description and the claims.

### Detailed Description

Unless otherwise specified herein, the term "resin" refers to a polymer or oligomer whereas the term "compound" is not a polymer or oligomer. For example, a compound may have too few or no repeating units typical of a polymer or oligomer.

The aromatic materials described herein are selected from an aromatic compound, an aromatic resin, a heteroaromatic compound, and a heteroaromatic resin. The aromatic compounds and aromatic resins may have at least one aromatic ring. The aromatic compounds and aromatic resins may have at least one aromatic ring having a fused ring attached thereto. Appropriate non-hindered amine groups include, for example, primary amines (e.g., -NH₂), and secondary amines (e.g., NHR wherein R is an aliphatic group). By aliphatic group it is meant a linear, branched, or cyclic alkyl group; a linear, branched, or cyclic alkenyl group; an alkaryl group; and an acyl group. The aliphatic groups may optionally be fluorinated or even perfluorinated.

In some embodiments, the aromatic material comprise two or more non-hindered amine groups. The two or more non-hindered amine groups may, for instance, be arranged as substituents on the same aromatic ring, there may be one aromatic non-hindered amine and one aliphatic non-hindered amine, and there may be one non-hindered amine group arranged as a substituent on one aromatic ring and a second non-hindered amine group arranged as a substituent on a second aromatic ring.

In some embodiments wherein the aromatic material is selected from an aromatic compound or aromatic resin, the aromatic material comprises at least one aromatic ring selected from a benzene ring, a naphthalene ring, a phenanthracene ring, an anthracene ring, and combinations thereof. As distinguished in the present description, an aromatic compound or resin differs from a heteroaromatic compound or resin in that all of the aromatic rings in an aromatic compound or resin have only carbon atoms in the aromatic ring. Heteroaromatic compounds and resins, as that term is used in the present description, indicates that at least one of the aromatic ring or rings present in the aromatic material comprises carbon atoms and at least one of nitrogen, sulfur, or oxygen.

In particular embodiments, the aromatic ring or rings present in an aromatic resin or aromatic compound is selected from a biphenyl group, a phenantrhyl group, an anthracyl group, an oxy biphenyl group, a binaphthyl group, a tolyl group, and combinations thereof. Examples of such embodiments include, for instance, 3,3'-diaminobenzidine; 9,10-diaminophenanthrene; 1,8-diaminonaphthalene; 1,1'-binaphthalene-2,2'-diamine; 2,3-diaminotoluene; 1-naphthylamine; 1-amino-8-naphthol-2-sulfonic acid; 2-aminoanthracene; and combinations thereof.

In further embodiments, it may be desirable to either increase or decrease the acidity of the non-hindered amine group attached to the aromatic ring. One having ordinary skill in the art recognizes the ability to increase the acidity of the non-hindered amine group by adding electron-withdrawing substituents to the aromatic ring, as well as the ability to decrease the acidity of the non-hindered amine group (thereby increasing the basicity of the non-hindered amine group) by adding electron-donating substituents to the aromatic ring. Such effects are described, for instance, in Perspectives on Structure and Mechanism in Organic Chemistry, Carroll, Brooks/Cole, Pacific Grove (1998) (particularly pages 366-86, discussing substituent effects and linear free energy relationships).

Accordingly, some embodiments of the present invention include those wherein at least one aromatic ring has a substituent other than the non-hindered amine group and other than hydrogen. Such substituents may be selected from an alkyl group, a fluorinated alkyl group (including a perfluorinated alkyl group), a halogen atom, a hydroxyl group, an alkoxy group, a fluorinated alkoxy group (including a perfluorinated alkoxy group), a nitrile group, a nitro group, an aromatic group, a fluorinated aromatic group, an alkyl-aromatic group, a fluorinated alkyl-aromatic (including a perfluorinated(alkyl) aromatic, alkyl perfluorinated(aromatic), and perfluorinated (alkyl-aromatic) groups), an acyl group, a carboxyl group, a sulfonic acid group, and combinations thereof.

In further embodiments, the aromatic material may be selected from a heteroaromatic compound and a heteroaromatic resin. The heteroaromatic compound or heteroaromatic resin may further have at least one non-hindered amine group bonded to a heteroaromatic ring. In some particular embodiments, the aromatic material comprises two or more non-hindered amine groups. Further, the heteroaromatic compound or heteroaromatic resin may have at least one heteroaromatic ring having two or more non-hindered amine groups bonded directly to the heteroaromatic ring. By "bonded directly", as used herein, it is meant that a substituent is bonded to a ring atom of an aromatic or heteroaromatic ring.

Further, the heteroaromatic compounds or heteroaromatic resins described herein may have a heteroaromatic ring that contains a nitrogen atom, a sulfur atom, an oxygen atom, or some combination thereof, along with one or more carbon atoms. Particular examples of such heteroaromatic groups include, for instance, 1,10-phenanthroline; thiazole; benzimidiazole; benzothiazole; imidizole; cyanuric acid; pyrimidine; benzotriazole; pyrazine; pyridine; and combinations thereof. Particular embodiments of heteroaromatic compounds or heteroaromatic reins include 2-aminobenzimidazole; 5-amino-1,10-phenanthroline; 2-aminobenzothiazole; 7-aminobenzothiazole; 2-aminothiazole; 2-amino-4,6-dimethylpyrimidine; 2,3-diaminopyridine; and combinations thereof.

The heteroaromatic compounds and heteroaromatic resins may, in some embodiments, have at least one heteroaromatic ring, which at least one heteroaromatic ring has at least one non-hindered amine group bonded to the aromatic ring. Appropriate non-hindered amine groups include, for example, primary amines (e.g., -NH₂), and secondary amines (e.g., NHR wherein R is an aliphatic group). By aliphatic group it is meant a linear, branched, or cyclic alkyl group; a linear, branched, or cyclic alkenyl group; an alkaryl group; and an acyl group. The aliphatic groups may optionally be fluorinated or even perfluorinated.

In further embodiments of the heteroaromatic compounds and heteroaromatic resins, it may be desirable to either increase or decrease the acidity of the non-hindered amine group attached to the heteroaromatic ring as described above.

Accordingly, some embodiments of the present invention include those wherein at least one heteroaromatic ring has a substituent other than the non-hindered amine group and other than hydrogen. Such substituents may be selected from an alkyl group, a fluorinated alkyl group (including a perfluorinated alkyl group), a halogen atom, a hydroxyl group, an alkoxy group, a fluorinated alkoxy group (including a perfluorinated alkoxy group), a nitrile group, a nitro group, an aromatic group, a fluorinated aromatic group, an alkyl-aromatic group, a fluorinated alkyl-aromatic (including a perfluorinated(alkyl) aromatic, alkyl perfluorinated(aromatic), and perfluorinated (alkyl-aromatic) groups), an acyl group, a carboxyl group, a sulfonic acid group, and combinations thereof.

In particular embodiments of the heteroaromatic compounds and heteroaromatic resins, it is understood that, while a heteroaromatic group is present, there may be other aromatic groups present that are not heteroaromatic.

In yet further embodiments, the aromatic material may be selected from heteroaromatic compounds and heteroaromatic resins wherein the aromatic material has a nitrogen atom in a heteroaromatic ring. In such embodiments, the aromatic material may further comprise at least one non-hindered amine group bonded directly to the heteroaromatic ring. Alternatively, such aromatic material may have no non-hindered amine groups bonded directly to the heteroaromatic ring. Further embodiments include heteroaromatic compounds or resins with at least two non-hindered amine groups bonded directly to the heteroaromatic ring.

The heteroaromatic ring may further comprise so-called heteroatoms other than nitrogen (e.g., sulfur and/or oxygen) in addition to at least one carbon atom. Such heteroaromatic rings include, for instance, 1,10-penanthroline; thiazole; benzaimidiazole; benzothiazole; imidizole; cyanuric acid; pyrimidine; benzotriazole; pyrazine; pyridine; and combinations thereof. Particular aromatic materials include 1,10-phenanthroline; 2-aminobenzimidazole; 5-amino-1,10-phenanthroline; 2-aminobenzothiazole; 7-aminobcnzothiazole; 2-aminothiazole; 2-amino-4,6-dimethylpyrimidine; 2,3-diaminopyridine; 2-phenylimidazole; cyanuric acid; benzotriazole, 2,3-pyrazinedicarboxamide; and combinations thereof.

Appropriate non-hindered amine groups optionally bonded directly to the heteroaromatic rings that comprise at least one nitrogen atom include, for example, primary non-hindered amines (e.g., -NH₂), and secondary non-hindered amines (e.g., NHR wherein R is an aliphatic group). By aliphatic group it is meant a linear, branched, or cyclic alkyl group; a linear, branched, or cyclic alkenyl group; an alkaryl group; and an acyl group. The aliphatic groups may optionally be fluorinated or even perfluorinated.

In further embodiments of the heteroaromatic compounds and heteroaromatic resins that comprise at least one aromatic ring having a nitrogen atom in the ring, it may be desirable to either increase or decrease the acidity of the non-hindered amine group attached to the heteroaromatic ring. One having ordinary skill in the art recognizes the ability to increase the acidity of the non-hindered amine group by adding electron-withdrawing substituents to the heteroaromatic ring, as well as the ability to decrease the acidity of the non-hindered amine group by adding electron-donating substituents to the heteroaromatic ring.

The preparation of all aromatic materials as described herein may be achieved by methods familiar to those of ordinary skill in the art. These methods include, for instance, those described in Organic Synthesis, 2nd ed., Fuhrhop and Penzlin, VCH, Weinheim (1994); Some Modern Methods of Organic Synthesis, 3rd ed., Carruthers, University Press, Cambridge (1993); and March's Advanced Organic Chemistry: Reactions, Mechanism and Structure, 5th ed., Smith and March, John Wiley & Sons, (2001) (particularly chapters 11 and 13).

In some embodiments, the present invention demonstrates that compositions comprising (a) an aromatic material as described herein; (b) an inorganic base; (c) a fluoroplastic; and optionally (d) a phase transfer catalyst, may give excellent adhesion to a substrate, in particular, to metal substrates. In yet further embodiments, a boiling water test was used to show that the interlayer adhesion remained strong after exposure of several hours, e.g., after 24 hours. Surprisingly, in some embodiments, the aromatic materials described herein may aid with the adherence of fluoropolymers, and in particular perfluoropolymers, to metal surfaces.

Fluoropolymers included in the present description include fluoroplastics, such as partially and perfluorinated fluoroplastics. Fluoroplastics include, for instance, those having interpolymerized units of one or more fluorinated or perfluorinated monomers such as tetrafluoroethylene (TFE), chlorotrifluoroethylene (CTFE), hexafluoropropylene (HFP), vinylidene fluoride (VDF), fluorovinyl ethers, perfluorovinyl ethers, as well as combinations of one or more of these. Fluoroplastics may further include copolymers comprising one or more of the fluorinated or perfluorinated monomers in combination with one or more non-fluorinated comonomer such as ethylene, propylene, and other lower olefins (e.g., C2-C9 containing alpha-olefins).

In other embodiments, polytetrafluoroethylene (PTFE) can be the fluoroplastic according to the present description. When PTFE is used, it may be used as a blend with another fluoropolymer and may also contain a fluoropolymer filler (in the blend or in the PTFE only).

More specifically, useful fluoroplastics also include those commercially available under the designations THV (described as a copolymer of tetrafluoroethylene, hexafluoropropylene, and vinylidene fluoride), FEP (a copolymer of tetrafluoroethylene and hexafluoropropylene), PFA (a copolymer of tetrafluoroethylene and perfluorovinyl ether), HTE (a copolymer of tetrafluoroethylene, hexafluoropropylene, and ethylene), ETFE (a copolymer of tetrafluoroethylene and ethylene), ECTFE (a copolymer of chlorotrifluoroethylene and ethylene), PVF (polyvinyl fluoride), PVDF (polyvinylidene fluoride), polychlorotrifluoroethylene (CPTFE), as well as combinations and blends of one or more of these fluoroplastics.

Any of the aforementioned fluoropolymers may further contain interpolymerized units of additional monomers, e.g., copolymers of TFE, HFP, VDF, ethylene, or a perfluorovinyl ether such as perfluoro(alkyl vinyl) ether (PAVE) and/or a perfluoro(alkoxy vinyl) ether (PAOVE). Combinations of two or more fluoroplastics may also be used. In some embodiments, fluoroplastics such as THV and/or ETFE and/or HTE are preferred.

In some embodiments, the present description provides an aromatic material wherein the aromatic material is provided on the surface of the fluoroplastic. In further embodiments, the fluoroplastic may have a coating comprising one or more of the aromatic material, an inorganic base, and optionally a phase transfer catalyst.

In addition to a fluoroplastic and an aromatic material as described above, the description also provides an inorganic base. Inorganic bases include inorganic compounds having a pKb of 7 or less. More specifically, useful inorganic bases include oxides and/or hydroxides of magnesium and calcium. In one aspect of the present invention, the inorganic base has a pKb sufficiently low to be capable of forming an amide salt with the aromatic material. In some embodiments, the inorganic base has a pKb below about 6, below about 5, below about 4, below about 2, around 0, or even below 0.6.

The aromatic material and/or salt former compounds described are generally present in small amounts relative to the weight of the fluoroplastic. For example, the amount of aromatic material and/or salt former compound (combined or individually) is generally below about 60 weight percent (wt %), below about 50 wt%, below about 35 wt%, below about 20 wt%, or even below 15 wt% of the overall composition (the aromatic material, salt former, phase transfer catalyst, if any, and fluoropolymer, but not including the substrate when used). In another aspect, the aromatic material and/or salt former (combined or individually) are generally above about 0.1 wt%, above 0.5 wt%, or even above 1 wt% of the overall composition.

In some embodiments, a phase transfer catalyst (PTC) may be used in the compositions described herein. Such materials are known in the art and include, for instance, triphenylbenzylphosphonium salts, tributylalkylphosphonium salts, tetraphenylphosphonium salts, tetrabutylphosphonium salts, tributylbenzylammonium salts, tetrabutylammonium salts, tetrapropylammonium salts, tetrakis(2-hydroxyethyl)ammonium salts, tetramethylammonium salts, tetraalkylarsonium salts, tetraarylarsonium salts, and triarylsulfonium salts. Also contemplated are multi-valent onium salts. That is, salts that are multi-valent cations having two or more sites of positive charge. The salts described include, for instance, halide salts such as bromide, chloride, and iodide salts. Also contemplated herein are crown-ether containing phase transfer catalysts.

The PTC may be used in amounts below about 20 wt%, below about 15 wt%, below about 10 wt%, below about 5 wt%, or even below about 2 wt%, based on the total weight of the salt former compound, the aromatic material, and the fluoropolymer (but not including the weight of the substrate when used). In another aspect, the PTC may be used in amounts above 0.1 wt%, above 0.3 wt%, or even above 0.5 wt% based on the total weight of the salt former compound, the aromatic material, and the fluoropolymer. In some embodiments, it has been found that adjusting the amount of phase transfer catalyst can reduce the amount of bubbling observed in coatings as described herein. That is, some of the coatings described herein, when heated with a substrate, form bubbles. By adjusting the amount of phase transfer catalyst, the amount of bubbling can be reduced. For instance, in some embodiments, increasing the amount of phase transfer catalyst may reduce the amount of bubbling observed.

The compositions described herein may also include additives incorporated therein. Additives include, but are not limited to, inert fillers, anti-oxidants, stabilizers, pigments, reinforcing agents, lubricants, flow additives and, other polymers. Yet further additives include metals and metal oxides such as, for instance, chromium oxide, chromium, zinc oxide, copper oxide, copper, nickel, titanium, stainless steel, aluminum, titanium dioxide, tin oxide, iron, iron oxide, and the like. Such metals may serve, for instance, as abrasion-resistant fillers or as compatibilizers. Also included herein are polymeric additives such as polyphenylene sulfide resin, epoxy resins, polyether sulfones, polyamide imide, polyetherether ketones, and combinations thereof. Other abrasion-resistant fillers include, for example, ceramics, and high temperature and/or abrasion-resistant polymers. Further additives include those capable of imparting desirable coating properties such as increased hardness, abrasion resistance, electrical and thermal conductivity, and color. Flow additives are, generally, materials known to improve wetting and flow of polymer compositions (including low molecular weight materials, oligomers, polymers, and combinations thereof). Flow additives may, for instance, be selected from low viscosity materials and materials that are not compatible with the fluoropolymer (e.g., hydrocarbon polymers such as polyacrylates). In some embodiments, the compositions are substantially free of polymers other than the fluoroplastic or combination of fluoroplastics described above. That is, the compositions may include less than 25 wt% of a polymer additive, less than 10 wt%, less than 5% of a polymer additive, or even no polymer additive.

In another aspect, the present description provides a composition comprising a reaction product of (a) an aromatic material as described herein; (b) an inorganic base; (c) a fluoroplastic; and optionally (d) a phase transfer catalyst. In yet a further aspect, the present description provides an article comprising a coating, the coating comprising a composition comprising a reaction product of a reaction product of (a) an aromatic material as described herein; (b) an inorganic base; (c) a fluoroplastic; and optionally (d) a phase transfer catalyst. In yet a further embodiment, the article comprises a coating, the coating comprising (a) an aromatic material as described herein; (b) an inorganic base; (c) a fluoroplastic; and optionally (d) a phase transfer catalyst.

In other aspects, the present description provides multi-layer articles that comprise a substrate and a first layer. The first layer comprises the reaction product of (a) an aromatic material as described herein; (b) an inorganic base; (c) a fluoroplastic; and optionally (d) a phase transfer catalyst.

In further embodiments, the present description provides multi-layer articles comprising a first layer that comprises the reaction product of (a) an aromatic material as described herein; (b) an inorganic base; (c) a fluoroplastic; and optionally (d) a phase transfer catalyst, wherein each of (i) the aromatic material and (ii) the base is, independently, present at the interface between the substrate and the remainder of the first layer, present in the fluoroplastic, or both. In some embodiments, the first layer is bonded to the substrate.

In yet further embodiments, the present description provides multi-layer articles comprising a substrate and a coating. The substrate may comprise a substantially organic material or a substantially inorganic material. The substantially organic material may optionally be essentially free of a phenolate or thiolate salt. In some embodiments, the coating of the multi-layer articles comprises a fluoroplastic that may be substantially free of fluoroelastomer. That is, the layer that comprises the fluoroplastic may contain less than about 10% by weight of fluoroelastomer, less than 5% by weight, less than 1% by weight, less than 0.5% by weight, or even no fluoroelastomer.

The substantially inorganic substrate can be, for example, glass, ceramic, metal, iron, stainless steel, steel, aluminum, copper, nickel, and alloys and combinations thereof. In certain embodiments, the substrate is selected from metal substrates. Other suitable Substrates include fluoropolymers, nylon and polyamide.

The substrate shape is not particularly limited. For example, the substrate can be the surface of a fiber, a flake, a particle, or combinations thereof. Specific examples include metallic sheeting in the form of ductwork such as is useful in exhaust ducts for chemical or semiconductor operations.

In some embodiments, multi-layer articles may further comprise a second layer adjacent to the first layer. The second layer may comprise a fluoropolymer. Further, a third layer may optionally be present, which may also comprise a fluoropolymer. The optional second and third layers may further comprise a mixture of two or more fluoropolymers.

The multi-layer articles described herein may provide bonding, as measured by peel strength testing, described below, between a substrate and a fluoroplastic coating composition. For example, at 22-25°C, after baking the samples at a higher temperature, the compositions described herein bond to various substrates. In some embodiments, the multi-layer articles maintain desirable peel strengths after various exposure conditions of increasing severity and duration to boiling water. For example, in several embodiments, the multi-layer articles provide high or very high peel strength even after boiling water exposure for 1 hour, for 5 hours, for 15 hours, or even for 24 hours. The multi-layer articles may exhibit peel strengths, optionally after boiling water exposure, of at least 00.7, at least 0.9, at least 1.8, at least 2.6, at least 3.5, or even at least 4.3 N/mm.

In another aspect, the present description provides a method of providing a fluoropolymer coating composition comprising providing a composition (a) an aromatic material as described herein; (b) an inorganic base; (c) a fluoroplastic; and optionally (d) a phase transfer catalyst. The fluoroplastic may be provided is granular or powder form. The method further comprises heating the composition to a temperature above the melting point of the aromatic material and mixing the composition. In certain embodiments, heating may be provided by high shear mixing. In some embodiments, the aromatic material is a liquid at 25°C at 1 atmosphere of pressure and is provided in liquid form to the balance of the composition. In other embodiments, the aromatic material may be dissolved in a solvent and the method may further comprise mixing the solvent containing the aromatic material with the fluoroplastic before heating the composition.

In another aspect, the present description provides a method of providing a fluoropolymer-coated surface. The method comprises providing a substrate (optionally selected from an inorganic material), applying a composition to the substrate, and bonding the composition to the substrate to give a bonded composition. Bonding the composition may comprise fusing the composition to the substrate. The composition applied to the substrate may comprise (a) an aromatic material as described herein; (b) an inorganic base; (c) a fluoroplastic; and optionally (d) a phase transfer catalyst. Each of the aromatic material and the base is, independently, present at the interface between the substrate and the remainder of the first layer, present within the fluoroplastic, or both. The composition may optionally be provided as the fluoroplastic having a coating, wherein the coating comprises one or more of an aromatic material, inorganic base, or phase transfer catalyst.

In further embodiments, the method may comprise bonding a second layer to the bonded composition, the second layer comprising a fluoropolymer. Bonding may, in some embodiments, comprise fusing.

In certain embodiments, the applying of the composition to the substrate comprises a method selected from, for example, electrostatic powder coating, co-extruding the composition and the substrate, and applying the composition to the substrate as a film, sheet, or molded part. In other embodiments, at least one of the aromatic material, phase transfer catalyst, and base may be applied to the substrate to form a primer layer before applying the remainder of the composition as described herein.

Various embodiments of the present invention are useful in chemical storage tanks, exhaust duct coatings, biomedical devices, electronic materials, cookware and bakeware, and architectural coatings, to name a few applications.

Objects and advantages of this invention are further illustrated by the following examples, but the particular materials and amounts thereof recited in these examples, as well as other conditions and details, should not be construed to unduly limit this invention.

### Examples

In the descriptions below, percent means percent by weight unless otherwise described in context. Unless otherwise stated, materials were available from Aldrich Chemicals, Milwaukee, WI.

### Materials

| Material | Source |
|---|---|
| PFA | PFA 6503 A EPC, a copolymer of TFE and PPVE available from Dyneon, LLC, Oakdale, MN. |
| ETFE | A copolymer of tetrafluoroethylene and ethylene available from Dyneon, LLC, as E-15858H07 |
| Sn | 5 |
| Tetraphenylphosphonium Chloride (TPPCl) | 2 |
| Tetraphenylphosphonium bromide (TPPBr) | 2 |
| 2-aminobenzothiazole | 4 |
| 2-aminobenzimidazole | 2 |
| 4-aminophenol | 2 |
| 2,3-diaminonaphthalene | 2 |
| 2,3-diaminotoluene | 2 |
| 1-amino-8-naphthol-4-sulfonic acid | 5 |
| 2-phenylimidazole | 2 |
| 1,10-phenanthroline | 2 |
| D-gluconic acid, calcium salt | 4 |
| 1-naphthalene sulfonic acid | 2 |
| 2,3-naphthalene dicarboxylic acid | 4 |
| 1,1,1,3,3,3-Hexafluoro-2-phenyl-2-propanol | 3 |

| | |
|---|---|
| Sources: 1. Aldrich, Milwaukee, WI 2. Alpha Aesar, Heysham, Lancanster 3. Lancaster, Pelham, NH 4. TCI, Portland, OR 5. Atlantic Equipment Engineers, Bergenfield, NJ | |

### Methods and Procedures

### Formulations

Except as provided otherwise, aromatic materials and PCT were dissolved in into a solution with methanol. Dry and liquid ingredients shown for each example in the tables were weighed, the salt former and the fluoroplastic were pre-blended a container with a spatula. The liquid solutions were and added to the container and stirred in using a spatula and the mixture was added to the milling chamber of a Bel-Art Micro Mill (available from Bel-Art Products Pequannock, NJ). The mill was turned on for 20-30 seconds to disperse the ingredients. The powder/slurry were poured back into the container, stirred, and added back into the mill and blended for an additional 20-30 seconds. Solids that were not easily put into an alcohol solution were either used as is with median particle size less than 5 microns or ground to less than 5 microns with a mortar and pestle.

### Peel Test Sample Preparation

Stainless steel (400 series) or aluminum panels (0.037 in. thickness (0.94 mm)) were sheared into 1 x 6 inch (2.54 x 15.2 cm) strips and degreased by immersing the steel strips in a heated alkaline solution of 75g of OAKITE CLEANER 164 (available from Oakite Products, Berkeley Heights, NJ) per liter of water maintained at 180°F (80°C) for 10 minutes. The strips were then rinsed several times with distilled water, and dried in an air circulating oven at 160°F (71°C) for 10 minutes. Unless otherwise noted each strip was grit blasted to roughen the surface using 30 mesh alumina grit and 80 psi (552 kPa) air pressure. Any residual dust was removed with an air gun. The strips were clamped to a larger metal plate and brushed with a thin layer of PFA 6503 B EPC powder (available from Dyneon) over 1.5 to 2 inches (5 cm) of one end of each strip. This provided an area where the coating would not adhere to the metal to create a tab for the peel test.

The strips were next electrostatically powder coated with approximately 40 grams of a primer using a Nordson SureCoat (Nordson Corporation Amherst, OH) at 70 volts, 150 kPa airflow. The strips were then baked in an air-circulating oven for 10 minutes (unless indicated otherwise) at 400°C. Upon removal of the strips from the oven, the strips were immediately hot flocked with the specific fluoropolymer topcoat at 70 kVolts, 150 kPa airflow and then placed back into the oven for an additional 10 minutes. Additional topcoats (total of 2 or 3) were applied and baked to achieve a coating thickness of 400 to 1000 µm. After the samples were cooled, the edges of each strip were scraped with a sharp blade to remove any coating that may have accumulated at the edges of the specimen. The samples were immersed in boiling water for 24 hours. After removal from the water, the samples were cooled to room temperature prior to peel testing.

### Peel Testing

The peel strength was measured by testing the samples using an INSTRON Model 5564 Tester (available from Instron Corp., Canton, MA) equipped with a floating roller peel test fixture at a crosshead speed of 6 in/min (15 cm/min) and peeling to 3.75 inches (9.5 cm) extension per ASTM D3167-97. The peel strength was calculated over 0.5 to 3.5 inches (1.3 to 8.9 cm) extension using an integrated average and reported in lb/inch width (N/mm) as an average of three samples. All peel testing was performed on samples after they were exposed to 24 hours of boiling water.

### Examples 1-18 and Comparative Examples C1-C6

The fluoropolymer blends were prepared with the amounts shown in Tables 1-3 by blending an aromatic material, an inorganic base, and a specific fluoropolymer and a solution of a phase transfer catalyst in methanol (weights in tables are for solids). Unless otherwise noted, the procedure used is that described under "Formulations" and all oven temperature conditions were 750°F (400°C) for 10 minutes. The resulting fluoropolymer blend was then powder coated and peel tested using the procedures described under "Peel Test Sample Preparation" and "Peel Testing" (unless otherwise noted). The formulations and peel test results are shown in the Tables 1-3. Where the peel strength is indicated as "Less than 2 lb/in (< 0.3 N/mm)", this indicates that the Peel Testing method was not able to quantify the strength of the bonding after boiling water exposure. Where the peel strength is indicated as "0", this indicates that no bond was observed after boiling water exposure. The comparative examples C1-C6 were prepared in a similar manner to the examples and are summarized in Table 4.

Table 1 shows a number of embodiments of the described fluoropolymer blends and multi-layer articles using various aromatic materials with PTC. Table 2 shows a number of embodiments of the described fluoropolymer blends and multi-layer articles using different fluoropolymers. Table 3 shows embodiments with various phase transfer catalysts. Table 4 shows a group of comparative examples C1-6. As can be seen in Table 4, when the aromatic material was excluded from the fluoropolymer blend or no base is used or a bonding additive different than the aromatic material was used, no bonding or poor bonding was observed to either stainless steel or aluminum after exposure to boiling water for 24 hours.

**Table 1. Compositions with Various Aromatic Materials**

| **Ex.** | **Fluoropolymer (g)** | **Aromatic Material (g)** | **PTC (g)** | **Additive (g)** | **Base (g)** | **Peel Strength lb/in (N/mm)** | |
|---|---|---|---|---|---|---|---|
| | | | | | | **SS** | **Al** |
| 1 | PFA (37.5) | 2-aminoanthracene (1.0) | TPPCI (0.5) | None | Ca(OH)₂ (1.0) | Tabs broke >28.1 (4.92) | <2.00 (<0.350) |
| 2 | PFA (37.5) | 2-amino-2-thiazoline (1.0) | TPPCl (0.5) | None | Ca(OH)₂ (1.0) | Tabs broke >36.9 (6.46) | 4.10 (0.718) |
| 3 | PFA (37.5) | 2-aminobenzothiazole (1.0) | TPPCI (0.5) | None | Ca(OH)₂ (1.0) | 24.9 (4.36) | 26.5 (4.64) |
| 4 | PFA (37.5) | 2-aminobenzimidazole (1.0) | TPPCl (0.5) | None | Ca(OH)₂ (1.0) | Tabs broke >31.3 (>5.48) | 17.7 (3.10) |
| 5 | PFA (36.6) | 4-aminophenol (1.0) | TPPCI (1.0) | Sn (0.4) | Ca(OH)₂ (1.0) | 14.3 (2.50) | 2.70 (0.473) |
| 6 | PFA (37.5) | 2,3-diaminonaphthalene (1.0) | TPPCI (0.5) | None | Ca(OH)₂ (1.0) | 13.6 (2.38) | 7.40 (1.30) |
| 7 | PFA (37.5) | 2,3-diaminotoluene (1.0) | TPPCI (0.5) | None | Ca(OH)₂ (1.0) | 11.4 (2.00) | 5.20 (0.911) |
| 8 | PFA (37.5) | 1,1'-binaphthalene-2,2'-diamine | TPPCl (0.5) | None | Ca(OH)₂ (1.0) | 18.8 (3.29) | 0.00 (0.00) |
| 9 | PFA (37.5) | 1-amino-8-naphthol-4-sulfonic acid (1.0) | TPPCI (0.50) | None | Ca(OH)₂ (1.0) | 20.9 (3.66) | 27.0 (4.73) |
| 10 | PFA (37.5) | 3,3'-diaminobenzidine (1.0) | TPPCl^{a} (0.5) | None | Ca(OH)₂ (1.0) | 13.0 (2.28) | 3.83 (0.671) |
| 11 | PFA (37.5) | 2-phenylimidazole (1.0) | TPPCI (0.5) | None | Ca(OH)₂ (1.0) | 3.82 (0.669) | 0.00 (0.00) |
| 12 | PFA (37.5) | benzotriazole | TPPCl (0.5) | None | Ca(OH)₂ (1.0) | 11.6 (2.03) | 7.61 (1.33) |
| 13 | PFA (38.5) | 1,8-diaminonaphthalene | TPPCl (0.5) | None | None | <2 (<0.350) | 13.6 (2.38) |

| | | | | | | | |
|---|---|---|---|---|---|---|---|
| ^{a} PTC premixed in hot-methanol | | | | | | | |

**Table 2. Compositions with Various Fluoropolymers**

| **Ex.** | **Fluoropolymer (g)** | **Aromatic Material (g)** | **PTC (g)** | **Base (g)** | **Peel Strength lb/in (N/mm)** | |
|---|---|---|---|---|---|---|
| | | | | | **SS** | **Al** |
| 14 | PFA (37.5) | 1,8-diaminonaphthalene (1.0) | TPPCl (0.5) | Ca(OH)₂ (1.0) | Tabs broke30.9 (5.41) | 23.4 (4.10) |
| 15 | ETFE (37.5) | 1,8-diaminonaphthalene (1.0) | TPPCI (0.5) | Ca(OH)₂ (1.0) | 36.1 (6.32) | 32.8 (5.74) |
| 16 | PFA | 1,10-phenanthroline | TPPCl | Ca(OH)₂ | Tabs broke | 8.89 |
| | (37.5) | (1.0) | (0.5) | (1.0) | 28.0 (4.90) | (1.56) |
| 17 | ETFE (37.5) | 1,10-phenanthroline (1.0) | TPPCI (0.5) | Ca(OH)₂ (1.0) | 0.00 (.00) | 18.7 (3.27) |

**Table 3. Compositions with Various PTC's**

| **Ex.** | **Fluoropolymer (g)** | **Aromatic Material (g)** | **PTC (g)** | **Base (g)** | **Peel Strength lb/in (N/mm)** | |
|---|---|---|---|---|---|---|
| | | | | | **SS** | **Al** |
| 18 | PFA (37.5) | 1,8-diaminonaphthalene (1.0)^{a} | TPPBr (0.5) | Ca(OH)₂ (1.0) | Tabs broke21.3 (3.73) | 12.0 (2.10) |

| | | | | | | |
|---|---|---|---|---|---|---|
| ^{a}Strips prepared using Alodine 5700, available from Henkel Surface Technologies, Madison Heights, M1 (i.e., strips were not grit blasted); Ca(OH)₂ 1,1'-bi-2-naphthol and PTC were wet blended in MeOH prior to mix. | | | | | | |

**Table 4. Comparative Compositions**

| **Ex.** | **Fluoropolymer (g)** | **Bonding additive (g)** | **PTC (g)** | **Base (g)** | **Peel Strength lb/in (N/mm)** | |
|---|---|---|---|---|---|---|
| | | | | | **SS** | **Al** |
| C1 | PFA (37.5) | D-Gluconic acid, calcium salt (1.0) | TPPCI (0.5) | Salt preformed | 0 (0) | 0 (0) |
| C2 | PFA (37.5) | Naphtalene-sulfonic acid (1.0) | TPPCI (0.5) | Ca(OH)₂ (1.0) | 0 (0) | 0 (0) |
| C3 | PFA (37.5) | 2,3 Naphthalenesulfonic acid (1.0) | TPPCl (0.5) | Ca(OH)₂ (1.0) | 0 (0) | 0 (0) |
| C4 | PFA (37.5) | 1,1,1,3,3,3-Hexafluoro-2-phenyl-2-propanol (1.0) | TPPCI (0.5) | Ca(OH)₂ (1.0) | 0 (0) | 0 (0) |
| C5 | PFA (38.5) | None | TPPCI (0.5) | Ca(OH)₂ (1.0) | <2.00 (<0.350) | <2.00 (<0.350) |
| C6 | PFA (39.0) | 1,8-diaminonaphthalene (1.0) | None | None | <2.00^{a,b} (<0.350) | <2.00^{a,c} (<0.350) |

| | | | | | | |
|---|---|---|---|---|---|---|
| ^{a} Estimated bond strength based upon manual peel. ^{b} Greater than 10 N/mm pre-boil peel strength ^{c} Less than 5 N/mm pre-boil peel strength | | | | | | |

## Claims

1. A composition comprising:
(a) an aromatic material selected from (i) an aromatic compound, (ii) an aromatic resin, (iii) a heteroaromatic compound, and (iv) a heteroaromatic resin, wherein the aromatic material has (1) at least one non-hindered amine group bonded to heteroaromatic ring or at least one aromatic ring having two or more non-bindered amine bonded directly to the aromatic ring (2) a heteroaromatic ring and has a nitrogen atom in the heteroaromatic ring, or (3) a combination thereof;
(b) an inorganic base;
(c) a fluoroplastic; and
(d) optionally a phase transfer catalyst.

2. The composition of claim 1 wherein the aromatic material is selected from 3,3'-diaminobenzidine, 9,10-diaminophenanthrene, 1,8-diaminonaphthalene, 1,1'-binaphthalene-2,2'-diamine, 2,3-diaminotoluene, 1-naphthylamine, 1-amino-8-naphthol-4-sulfonic acid, 2-aminoanthracene, and combinations thereof

3. The composition of claim 1 wherein the aromatic material is selected from a heteroaromatic compound and a heteroaromatic resin and wherein the aromatic material has at least one non-hindered amine group bonded to a heteroaromatic ring.

4. The composition of claim 3 wherein the heteroaromatic ring contains a nitrogen, a sulfur, an oxygen, or combinations thereof.

5. The composition of claim 1 wherein the aromatic material is selected from 1,10-phenanthroline, 2-aminobenzimidazole, 5-amino-1,10-phenanthroline, 2-aminobenzothiazole, 7-aminobenzothiazole, 2-aminothiazole, 2-amino-4,6-dimethylpyrimidine, 2,3-diaminopyridine, 2-phenylimidazole, cyanuric acid, benzotriazole, 2,3-pyrazinedicarboxamide, and combinations thereof.

6. A composition comprising a reaction product of
(a) an aromatic material selected from (i) an aromatic compound, (ii) an aromatic resin, (iii) a heteroaromatic compound, and (iv) a heteroaromatic resin, wherein the aromatic material has (1) at least one non-hindered amine group bonded to a heteroaromatic ring, or at least one aromatic ring having two or more non-bindered amine bonded directly to the aromatic ring (2) heteroaromatic ring and has a nitrogen atom in the heteroaromatic ring, or (3) a combination thereof;
(b) an inorganic base;
(c) a fluoroplastic; and
(d) optionally a phase transfer catalyst.

7. A multi-layer article comprising:
a) a substrate;
b) a first layer comprising a reaction product of (A) an aromatic material selected from (i) an aromatic compound, (ii) an aromatic resin, (iii) a heteroaromatic compound, and (iv) a heteroaromatic resin, wherein the aromatic material has (1) at least one non-hindered gamine group bonded to a heteroaromatic ring, or at least one aromatic ring having two or more non-bindered amine bonded directly to the aromatic ring (2) a heteroaromatic ring and has a nitrogen atom in the heteroaromatic ring, or (3) a combination thereof; (B) an inorganic base; (C) a fluoroplastic; and (D) optionally a phase transfer catalyst.;
wherein each of the aromatic material and the inorganic base is, (i) independently present at an interface between the substrate and the remainder of the first layer, (ii) independently present with the fluoroplastic, or (iii) both; and wherein the first layer is bonded to the substrate.

8. A method of providing a fluoropolymer coated surface comprising:
(a) providing a substrate;
(b) applying to the substrate a first layer comprising
(1) an aromatic material selected from (i) an aromatic compound, (ii) an aromatic resin, (iii) a heteroaromatic compound, and (iv) a heteroaromatic resin, wherein the aromatic material has (A) at least one non-hindered amine group bonded to a heteroaromatic ring, or at least one aromatic ring having two or more non-bindered amine bonded directly to the aromatic ring (B) a heteroaromatic ring and has a nitrogen atom in the heteroaromatic ring, or (C) a combination thereof;
(2) a fluoroplastic;
(3) an inorganic base; and
(4) optionally a phase transfer catalyst
wherein the aromatic material is present at an interface between the substrate and the remainder of the first layer, present with the fluoroplastic, or both; and
(c) bonding the composition to the substrate.

## Patentansprüche

1. Zusammensetzung, umfassend:
(a) eine aromatische Substanz, die aus (i) einer aromatischen Verbindung, (ii) einem aromatischen Harz, (iii) einer heteroaromatischen Verbindung und (iv) einem heteroaromatischen Harz ausgewählt ist, wobei die aromatische Substanz (1) mindestens eine ungehinderte Amingruppe, die an einen heteroaromatischen Ring gebunden ist, oder mindestens einen aromatischen Ring mit zwei oder mehr ungehinderten Amingruppen, die direkt an den aromatischen Ring gebunden sind, (2) einen heteroaromatischen Ring und ein Stickstoffatom in dem heteroaromatischen Ring oder (3) eine Kombination davon aufweist;
(b) eine anorganische Base;
(c) einen Fluoroplast und
(d) gegebenenfalls einen Phasentransferkatalysator.

2. Zusammensetzung nach Anspruch 1, wobei die aromatische Substanz aus 3,3`-Diaminobenzidin, 9,10-Diaminophenanthren, 1,8-Diaminonaphthalin, 1,1'-Binaphthalin-2,2'-diamin, 2,3-Diaminotoluol, 1-Naphthylamin, 1-Amino-8-naphthol-4-sulfonsäure, 2-Aminoanthracen und Kombinationen davon ausgewählt ist.

3. Zusammensetzung nach Anspruch 1, wobei die aromatische Substanz aus einer heteroaromatischen Verbindung und einem heteroaromatischen Harz ausgewählt ist und wobei die aromatische Substanz mindestens eine ungehinderte Amingruppe, die an einen heteroaromatischen Ring gebunden ist, aufweist.

4. Zusammensetzung nach Anspruch 3, wobei der heteroaromatische Ring einen Stickstoff, einen Schwefel, einen Sauerstoff oder Kombinationen davon enthält.

5. Zusammensetzung nach Anspruch 1, wobei die aromatische Substanz aus 1,10-Phenanthrolin, 2-Aminobenzimidazol, 5-Amino-1,10-phenanthrolin, 2-Aminobenzothiazol, 7-Aminobenzothiazol, 2-Aminothiazol, 2-Amino-4,6-dimethylpyrimidin, 2,3-Diaminopyridin, 2-Phenylimidazol, Cyanursäure, Benzotriazol, 2,3-Pyrazindicarboxamid und Kombinationen davon ausgewählt ist.

6. Zusammensetzung, umfassend das Reaktionsprodukt von:
(a) einer aromatischen Substanz, die aus (i) einer aromatischen Verbindung, (ii) einem aromatischen Harz, (iii) einer heteroaromatischen Verbindung und (iv) einem heteroaromatischen Harz ausgewählt ist, wobei die aromatische Substanz (1) mindestens eine ungehinderte Amingruppe, die an einen heteroaromatischen Ring gebunden ist, oder mindestens einen aromatischen Ring mit zwei oder mehr ungehinderten Amingruppen, die direkt an den aromatischen Ring gebunden sind, (2) einen heteroaromatischen Ring und ein Stickstoffatom in dem heteroaromatischen Ring oder (3) eine Kombination davon aufweist;
(b) einer anorganischen Base;
(c) eines Fluoroplasts und
(d) gegebenenfalls eines Phasentransferkatalysators.

7. Mehrschichtiger Artikel, umfassend:
a) ein Substrat;
b) eine erste Schicht, umfassend ein Reaktionsprodukt von: (A) einer aromatischen Substanz, die aus (i) einer aromatischen Verbindung, (ii) einem aromatischen Harz, (iii) einer heteroaromatischen Verbindung und (iv) einem heteroaromatischen Harz ausgewählt ist, wobei die aromatische Substanz (1) mindestens eine ungehinderte Amingruppe, die an einen heteroaromatischen Ring gebunden ist, oder mindestens einen aromatischen Ring mit zwei oder mehr ungehinderten Amingruppen, die direkt an den aromatischen Ring gebunden sind, (2) einen heteroaromatischen Ring und ein Stickstoffatom in dem heteroaromatischen Ring oder (3) eine Kombination davon aufweist; (B) einer anorganischen Base; (C) eines Fluoroplasts und (D) gegebenenfalls eines Phasentransferkatalysators;
wobei die aromatische Substanz und die anorganische Base jeweils (i) unabhängig an der Grenzfläche zwischen dem Substrat und dem Rest der ersten Schicht vorliegen, (ii) unabhängig mit dem Fluoroplast vorliegen oder (iii) beides; und wobei die erste Schicht an das Substrat gebunden ist.

8. Verfahren zur Bereitstellung einer mit Fluorpolymer beschichteten Oberfläche, bei dem man:
(a) ein Substrat bereitstellt;
(b) auf das Substrat eine erste Schicht, umfassend
(1) eine aromatische Substanz, die aus (i) einer aromatischen Verbindung, (ii) einem aromatischen Harz, (iii) einer heteroaromatischen Verbindung und (iv) einem heteroaromatischen Harz ausgewählt ist, wobei die aromatische Substanz (A) mindestens eine ungehinderte Amingruppe, die an einen heteroaromatischen Ring gebunden ist, oder mindestens einen aromatischen Ring mit zwei oder mehr ungehinderten Amingruppen, die direkt an den aromatischen Ring gebunden sind, (B) einen heteroaromatischen Ring und ein Stickstoffatom in dem heteroaromatischen Ring oder (C) eine Kombination davon aufweist;
(2) einen Fluoroplast;
(3) eine anorganische Base und
(4) gegebenenfalls einen Phasentransferkatalysator;
aufbringt;
wobei die aromatische Substanz an der Grenzfläche zwischen dem Substrat und dem Rest der ersten Schicht vorliegt, mit dem Fluoroplast vorliegt oder beides; und
(c) die Zusammensetzung an das Substrat bindet.

## Revendications

1. Composition comprenant :
(a) un matériau aromatique choisi parmi (i) un composé aromatique, (ii) une résine aromatique, (iii) un composé hétéroaromatique, et (iv) une résine hétéroaromatique, lequel matériau aromatique possède (1) au moins un groupe amine sans empêchement stérique lié à un noyau hétéroaromatique, ou au moins un noyau aromatique comportant deux ou plus de deux groupes amine sans empêchement stérique liés directement au noyau aromatique, (2) un noyau hétéroaromatique et possède un atome d'azote dans le noyau hétéroaromatique, ou (3) une combinaison de ceux-ci,
(b) une base minérale ;
(c) une matière plastique fluorée ; et
(d) éventuellement un catalyseur de transfert de phase.

2. Composition selon la revendication 1, dans laquelle le matériau aromatique est choisi parmi la 3,3'-diaminobenzidine, le 9,10-diaminophénanthrène, le 1,8-diaminonaphtalène, la 1,1'-binaphtalène-2,2'-diamine, le 2,3-diaminotoluène, la 1-naphtylamine, l'acide 1-amino-8-naphtol-4-sulfonique, le 2-aminoanthracène, et des combinaisons de ceux-ci.

3. Composition selon la revendication 1, dans laquelle le matériau aromatique est choisi parmi un composé hétéroaromatique et une résine hétéroaromatique et dans laquelle le matériau aromatique possède au moins un groupe amine sans empêchement stérique lié à un noyau hétéroaromatique.

4. Composition selon la revendication 3, dans laquelle le noyau hétéroaromatique contient un atome d'azote, un atome de soufre, un atome d'oxygène, ou des combinaisons de ceux-ci.

5. Composition selon la revendication 1, dans laquelle le matériau aromatique est choisi parmi la 1,10-phénanthroline, le 2-aminobenzimidazole, la 5-amino-1,10-phénanthroline, le 2-aminobenzothiazole, le 7-aminobenzothiazole, le 2-aminothiazole, la 2-amino-4,6-diméthylpyrimidine, la 2,3-diaminopyridine, le 2-phénylimidazole, l'acide cyanurique, le benzotriazole, le 2,3-pyrazinedicarboxamide, et des combinaisons de ceux-ci.

6. Composition comprenant un produit de réaction
(a) d'un matériau aromatique choisi parmi (i) un composé aromatique, (ii) une résine aromatique, (iii) un composé hétéroaromatique et (iv) une résine hétéroaromatique, lequel matériau aromatique possède (1) au moins un groupe amine sans empêchement stérique lié à un noyau hétéroaromatique ou au moins un noyau aromatique comportant deux ou plus de deux groupes amine sans empêchement stérique liés directement au noyau aromatique, (2) un noyau hétéroaromatique et possède un atome d'azote dans le noyau hétéroaromatique, ou (3) une combinaison de ceux-ci ;
(b) d'une base minérale ;
(c) d'une matière plastique fluorée ; et
(d) éventuellement d'un catalyseur de transfert de phase.

7. Article multicouche comprenant :
a) un substrat ;
b) une première couche comprenant un produit de réaction (A) d'un matériau aromatique choisi parmi (i) un composé aromatique, (ii) une résine aromatique, (iii) un composé hétéroaromatique et (iv) une résine hétéroaromatique, lequel matériau aromatique possède (1) au moins un groupe amine sans empêchement stérique lié à un noyau hétéroaromatique, ou au moins un noyau aromatique comportant deux ou plus de deux groupes amine sans empêchement stérique liés directement au noyau aromatique, (2) un noyau hétéroaromatique et possède un atome d'azote dans le noyau hétéroaromatique, ou (3) une combinaison de ceux-ci ; (B) d'une base minérale ; (C) d'une matière plastique fluorée ; et (D) éventuellement d'un catalyseur de transfert de phase ;
dans lequel chacun du matériau aromatique et de la base minérale est (i) présent indépendamment à une interface entre le substrat et le reste de la première couche, (ii) présent indépendamment avec la matière plastique fluorée, ou (iii) les deux ; et dans lequel la première couche est liée au substrat.

8. Procédé permettant d'obtenir une surface revêtue d'un fluoropolymère, comprenant les étapes consistant à :
(a) se procurer un substrat ;
(b) appliquer sur le substrat une première couche comprenant
(1) un matériau aromatique choisi parmi (i) un composé aromatique, (ii) une résine aromatique, (iii) un composé hétéroaromatique et (iv) une résine hétéroaromatique, lequel matériau aromatique possède (A) au moins un groupe amine sans empêchement stérique lié à un noyau hétéroaromatique, ou au moins un noyau aromatique comportant deux ou plus de deux groupes amine sans empêchement stérique liés directement au noyau aromatique, (B) un noyau hétéroaromatique et possède un atome d'azote dans le noyau hétéroaromatique, ou (C) une combinaison de ceux-ci ;
(2) une matière plastique fluorée ;
(3) une base minérale ; et
(4) éventuellement un catalyseur de transfert de phase dans lequel le matériau aromatique est présent à une interface entre le substrat et le reste de la première couche, présent avec la matière plastique fluorée, ou les deux ; et
(c) lier la composition au substrat.
